# EUROPEAN PATENT APPLICATION

(11) **EP 2 574 260 A1**
(43) Date of publication of application: **03.04.2013**
(21) Application number: 12172525.3
(22) Date of filing: 19.06.2012
(51) Int. Cl.: A47J 31/06, A47J 31/36

(54) **An assembly for use in a device for the preparation of an extract from a product to be extracted, as well as a holder and a pouch for use in a device for the preparation of an extract from a product to be extracted**

(30) Priority: 27.09.2011 NL 2007480
(71) Applicant: Stas I.P. B.V., 5633 AD Eindhoven (NL)
(72) Inventor: Stas, Marinus Barbara Arnoldus Maria, 5527 JT HAPERT (NL); Cats, Petrus Martinus Maria, 5633 AD EINDHOVEN (NL)
(74) Representative: Algemeen Octrooi- en Merkenbureau

(57) **Abstract**

The invention relates to an assembly for use in a device for preparing an extract from a product to be extracted, consisting of a holder at least comprising at least a bottom provided with at least one passage and an upright side wall, which bound an interior space, and a pouch made of a filtering material, which is filled with the product to be extracted and which is present in the interior space of the holder.

The invention also relates to a holder for use in a device for preparing an extract from a product to be extracted, as well as to a pouch for use in an assembly or a holder according to the invention, which pouch is made of a filter paper and which is filled with the product to be extracted.

The object of the invention is to provide an assembly or a holder as described in the introduction which obviates this drawback. According to the invention, the assembly or the holder is characterised in that the holder is designed for ejecting the pouch.

Thus, a simple solution is provided to the problem of the used pouch being stuck, in that the pouch can be ejected from the holder without additional tools being used.

## Description

The invention relates to an assembly for use in a device for preparing an extract from a product to be extracted, consisting of a holder at least comprising a bottom provided with at least one passage and an upright side wall, which bound an interior space, and a pouch made of a filtering material, which is filled with the product to be extracted and which is present in the interior space of the holder.

The invention also relates to a holder for use in a device for preparing an extract from a product to be extracted, as well as to a pouch for use in an assembly or a holder according to the invention, which pouch is made of a filtering material and which is filled with the product to be extracted.

Such an assembly is known, for example from NL-1007171, and is commercially used in the so-called Senseo® coffee-makers. In such coffee-making machines, the holder can be accommodated together with a pouch that is filled with a certain amount of coffee. Hot water is passed through the pouch and the holder under pressure, whereupon the coffee thus brewed runs out of the holder and can be collected.

A similar assembly is used for the Nespresso® coffee-makers, in which the holder fully surrounds and encloses the pouch.

After use, the holder with the used pouch must be removed from the coffee-maker and the pouch must be removed. A known problem typical of such assemblies, in particular the assemblies used in the Nespresso® is the removal of the used pouch from the holder. Since the coffee is prepared under a relatively high water pressure in Nespresso® coffee-makers, the pouch is frequently stuck in the machine (actually the holder), to such an extent that removing the pouch, which is frequently still hot, is a difficult and unpleasant job.

The object of the invention is to provide an assembly or a holder as described in the introduction which obviates this drawback. According to the invention, the assembly or the holder is **characterised in that** the holder is designed for ejecting the pouch.

Thus, a simple solution is provided to the problem of the used pouch being stuck, in that the pouch can be ejected from the holder without additional tools being used.

According to another aspect of the invention, at least part of the holder is movable relative to the pouch for ejecting the pouch. In particular, at least the movable part of the holder is deformable, more in particular, at least the deformable part of the holder is reversibly deformable. This makes it possible to eject the used pouch by deforming the holder without using additional aids or tools. Moreover, manual measures are thus not needed, which, in the case of hot used pouches, enhances the user-friendliness. As a result of the reversible deformability of at least part of the holder, the holder can be reused time and again.

The deformable part of the holder also causes the extract (coffee) in the pouch to be compressed during use or during the preparation of the extract, so that no bypass past the pouch can develop and thus hot water (under pressure) is prevented from flowing past the pouch. This enhances the quality (strength) of the extraction liquid.

In a special embodiment, the deformable part of the holder is made of a more flexible material than the rest of the holder, more in particular, the deformable part of the holder is made of a thinner material than the rest of the holder.

In order to be able to remove a pouch from the holder in an efficient and effective manner after use or during the preparation of the extract, at least the bottom is deformable in a specific, functional embodiment. The bottom in that case comprises a bottom part that is movable relative to the holder, making it possible to press the used pouch from the holder in an effective manner. Removing the used pouch from the holder can take place even more efficiently in that the bottom part abuts against the upright side wall all around. Thus, the pouch abuts against the bottom part with a large contact area, so that removal is readily possible. The bottom part is movable under the influence of the pressure that is built up in the holder during extraction of the pouch.

According to another aspect of the invention, in order to further facilitate the removal of the pouch by means of the bottom part, the bottom part is provided with a projecting cam, which extends through an opening formed in the bottom. By manually pressing the projecting cam inward, the bottom part is moved relative to the bottom of the holder, so that the used pouch is ejected from the holder.

According to another aspect of the invention, the bottom part is provided with one or more passages so as not to adversely affect the preparation of the extract from the product to be extracted that is present in the pouch.

In another deformable embodiment of the assembly or the holder according to the invention, the deformable bottom is provided with at least one circumferential folding ridge.

According to one embodiment, in order to prevent the pouch from closing the bottom and the at least one passage provided therein during the preparation of the extract from the product to be extracted that is present in the pouch, the bottom is provided with a plurality of upright projections arranged around the at least one passage and directed toward the interior space. These projections keep the compressed pouch slightly spaced from the bottom and the at least one passage, so that blocking is prevented.

In another deformable embodiment of the assembly or the holder according to the invention, at least one circumferential peripheral part of the upright wall is deformable. In that case, the deformable circumferential peripheral part of the upright wall may be designed as a folding bellows, which enables reversible deformation of the holder and effective ejection of the pouch after use.

In a further embodiment of the holder according to the invention, the interior space of the holder can be closed by means of a closing member which can be placed on the upright wall, which closing member is provided with at least one passage. In that case, the holder and the closing member can be interconnected by means of at least one pivot.

In another embodiment according to the invention, the holder is provided with a projection screening the at least one passage. Said projection may be made of an elastic material. When the holder assembly is being removed from the device, the projection can be deformed by a finger of the user, so that the projection screens the passage and, if necessary, actually closes it. As a result, hot extraction liquid is prevented from squirting from the passage (or passages) in the direction of the user(s hand) upon deformation of the deformable bottom for the purpose of removing the used pouch from the holder. In this manner, contamination, but above all, injuries or burns caused by the hot extraction liquid are prevented.

The invention will now be explained in greater detail with reference to a drawing, in which
Figure 1 shows an embodiment of an assembly comprised of a holder and a pouch according to the invention;
Figure 2a-2c shows a first embodiment of a holder according to the invention;
Figure 3a-3l shows further embodiments of a holder according to the invention;
Figure 4a-4b shows another embodiment of a holder according to the invention.

For a better understanding of the invention, a detailed description will now be given in which corresponding parts bear the same reference numerals.

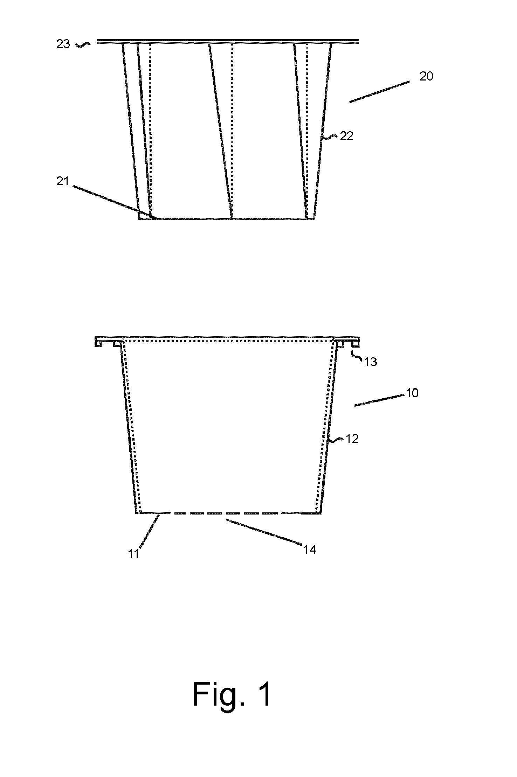

Reference numeral 1 in figure 1 denotes an assembly made up of a holder 10 and a pouch 20 filled with a product to be extracted. Such an assembly is used in particular in coffee-makers marketed under the trade name Nespresso®.

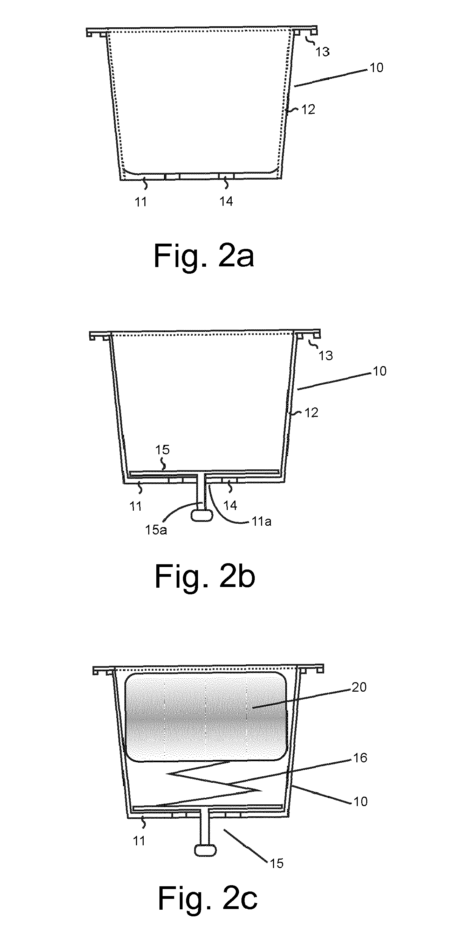

The assembly 1 is made up of a holder 10 and a pouch 20 which can be accommodated in the holder 10. The holder 10 is made up of a bottom part 11 and a side wall 12 circumferentially extending therefrom, as well as a peripheral edge 13 enabling a tight fit in a space intended for this purpose in the coffee-maker. At least the bottom 11 of the holder 10 is provided with one or more passages 14 for allowing passage of water or extract liquid under pressure. Also see figures 2a-2b.

The pouch 20 filled with the product to be extracted is made of a filtering material, such as a filter paper or a filtering tissue, and its shape or external dimension or external volume is substantially in conformity with the internal dimensions of the holder 10. Thus, the pouch 20 has a bottom part 21 as well as an upright circumferential side wall 22 which, upon being placed in the holder, closely abut against the bottom part 11 and the upright side wall 12 of the holder 10, respectively. The pouch 20 is also optionally provided with a circumferential side edge 23 which rests on the upright side edge 13 of the holder 10, thus effecting a proper tight fit in the coffee-maker.

During operation, the pouch 20 is firmly pressed into the holder 10, and water is pressed under high pressure, via the passages 14, through the assembly to prepare the extract, here coffee. After use, the pouch must be removed from the holder, which often leads to problems because the pouch is not only tightly fitted in the holder, but is also still hot after use, as a result of which manual removal is problematic.

In accordance with the invention, the assembly is arranged for ejecting the pouch and, more in particular, the holder is provided with means for ejecting the pouch.

An embodiment is shown in figure 2a-2c, wherein the holder in figure 2b, more particularly the bottom 11, is provided with a bottom part 15 which can be moved relative to the holder 10. Said bottom part 15 is designed as a disc which abuts against the inner side of the upright side wall 12 all around the circumference. As is clearly shown in figure 2b, the bottom 11 is provided with a through-bore 11a through which extends a projecting cam 15a, which is connected with the bottom part 15. By virtue thereof, after use, the bottom part 15 can be moved upwards by manually energizing the projecting cam 15a, so that the tightly fitted pouch is ejected from the holder 10.

Another exemplary embodiment is shown in figure 2c, wherein a spring 16 is arranged between the pouch 20 and the bottom part 15. This spring is compressed slightly more when the assembly is being placed in the coffee-maker and when the extract is being prepared, so that after the assembly has been removed, the spring 16 can release and press or eject the used pouch 20 out of the holder 10 by means of the bottom part 15.

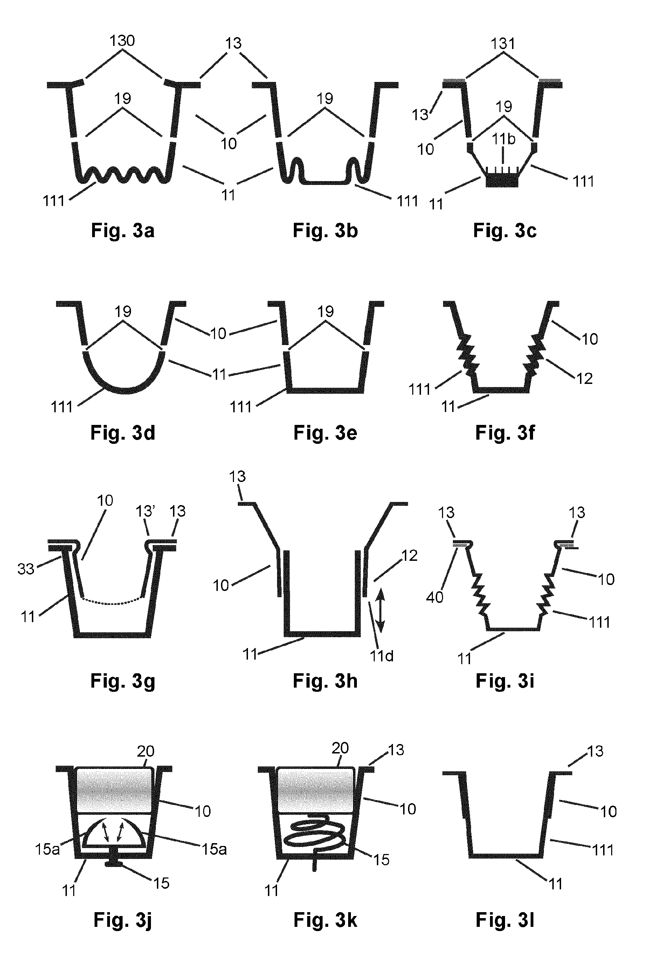

In figures 3a through 3l, various exemplary embodiments are shown of holders 10 provided with means facilitating the ejection of a pouch (not shown here) after use. Although it is only shown in figures 1, 2a and 2b, it is to be noted that in each embodiment at least the bottom 11 of the holder 10 is provided with one or more passages 14 to allow passage of water or liquid extracted under pressure.

In the exemplary embodiments shown in figures 3a through 3f, at least part of the holder 10 is deformable, but more in particular reversibly deformable.

To achieve this, at least the deformable part of the holder can be made of a material which is, for example, more flexible than the rest of the holder. This material may be a functionally different flexible material examples of which are shown, for example, in the sub-figures 3a, 3b, 3d and 3e. In this case, the flexible part of the holder is the bottom 11 which is secured to the more rigid holder 10 at a location close to reference numeral 19, for example by means of injection moulding or another connecting technique, such as gluing or ultrasonic welding or the like, or by means of dipping a synthetic resin.

The holder 10 may alternatively be made of one and the same material, such as in the case of the embodiments of figures 3a-3l, wherein (see figure 3c) the deformable part of the holder (here the bottom 11) is constructed so as to be thinner, which is indicated by means of reference numeral 111. Also in this embodiment, the bottom 11 is provided with upright, projecting cams 11b which prevent the passages in the bottom 11 from being fully closed as a result of the pouch being compressed in the holder. Also in this manner, water can still be pressed under pressure through the passages in the bottom 11 and through the pouch.

In the embodiment of figure 3c, preferably only the bottom part 11' is provided with one or more passages 14, so that said one or more passages can be blocked by a finger, which-for ejecting the used pouch-deforms the bottom part 11'. Thus, hot residual liquid (water or extraction liquid) is prevented from squirting through the passage(s) in the direction of (the face of) the user.

In the embodiments of the sub-figures 3a and 3b, the deformable bottom 11 is provided with at least a circumferential folding ridge 111, which allows the bottom to be reversibly deformable for the purpose of ejecting the used pouch from the holder. In figures 3d and 3e, the bottom 11 is made of a more flexible material 111, so that deformation with respect to the more rigid material of the holder 10 enables a used pouched to be ejected. In figure 3d, the bottom is convex in shape, while in figure 3e, the bottom 11 is designed so as to be flat yet flexible and hence reversibly deformable.

In figure 3a, the holder 10 is provided, near its upper circumferential edge 13, with an inwardly directed edge (or flange 130) which may or may not be resilient or flexible, which serves to enable accommodating a pouch (not shown) in the holder so as to be a tight fit therein. As a result, a small clamping force is obtained, enabling a compact accommodation of the pouch, and minimizing leakage of water past the pouch during use (under high pressure). Needless to say that such a circumferential flange 130 can also be applied to any one of the other exemplary embodiments of a holder according to the invention, as shown in figures 2a-2c, 3a-3l.

In figure 3f, at least part of the circumferential upright wall 12 is deformable. More particularly, in figure 3f, a circumferential peripheral part 111 of the upright wall 12 is constructed so as to be a folding bellows, as a result of which the reversible deformability of the holder enables a used pouch to be ejected.

In figures 3g and 3h, other exemplary embodiments are shown, wherein the holder 10 is composed of two separate portions (like in figures 2b-2c), i.e. an essentially rigid, stiff, non-deformable portion and a deformable portion (figure 3g), and around the holder 10, a flexible and deformable sleeve 11 is provided whose inner circumference closely corresponds to the external dimensions of the holder 10. In the assembly (holder 10-sleeve 11), a pouch has to be provided which, after use, can be simply ejected from the holder by deforming the flexible sleeve 11.

The flexible sleeve 11 is provided with a circumferential collar 33 consisting of a thickened edge, which can be accommodated as a tight fit in a circumferential recess 13' of the circumferential edge 13 of the holder 10. This ensures proper confinement.

In figure 3h, the bottom 11 can be slidably accommodated in the holder 10 and is provided with an upright edge 11d which is a close sliding fit between the space formed by the upright wall 12 of the holder 10. Also this enables ejection of the used pouch to be facilitated by moving the bottom 11.

In figure 3i, the circumferential edge 13 is provided with a circumferential recess 13'. A circumferential sealing ring 40 can be accommodated therein, which ensures good sealing if the holder 10 with the pouch 20 is placed in a coffee-maker. This holds true for all types shown in figures 2a-2c, 3a-3l.

Optionally with respect to the embodiment of figures 2a-2c, the bottom part 15 in figure 3j may be provided with projecting, springing, spacing arms 15a, which are depressed by the pouch 20, and when the assembly is removed from the device, these spacing arms release and thus support and facilitate the ejection of the pouch.

Figure 3k shows an alternative, in which a spring element 15 is arranged between the bottom 11 and the pouch 20, which spring element extends outwards through the bottom 11. Also in this case, during use, the spring element 15 is depressed by the pouch 20 and releases when the assembly is removed from the device. As a result, ejection of the pouch is supported and facilitated, and can be enhanced, if necessary, by pressing the spring element 15 inwards by manually exerting an inwardly directed pressure on the outwardly projecting end portion 15a.

Figure 3l shows an embodiment analogous to that of figure 3c, in which the deformable portion 111 of the holder 10 is thinner and the holder 10 is made in one piece and of the same material, unlike the deformable, thin portion 111 of figure 3c, which may be made of a different, flexible type of material and which is secured to the holder 10, which is made of a more rigid material, at the location of reference numeral 19.

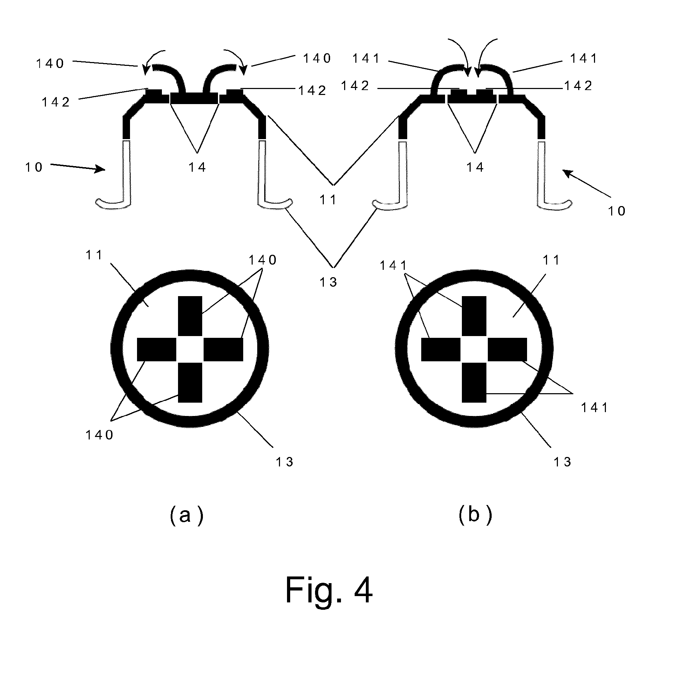

Figure 4a and 4b show another embodiment of a holder assembly according to the invention.

In figure 4a, the holder 10 is provided with a number of passages 14 as well as with a number of projections 140 which are secured to the bottom 11 at the location of the passages 14, screening but not closing each respective passage 14.

Thus, during the preparation of the extract, hot liquid can flow under pressure past the projections 140 and through the passages 14 in the direction of the pouch (not shown) accommodated in the holder 10.

After the preparation of the extract, the holder 10 accommodating the used pouch has to be removed from the extract preparation device, after which the used pouch subsequently has to be removed from the holder. The used pouch can be removed by means of the holder according to the invention by manually deforming the deformable bottom 11 of the holder 10. To prevent hot extraction liquid squirting through the passages 14 as a result of the deformation of the bottom 11 and the pressure thus exerted on the pouch, the projections 140 function to screen the passages 14.

To this end, the projections 140 are for example made of an elastic material, which in the case of deformation due to a force or pressure exerted by a finger of the user screens the respective passage 14. In figure 4a this is shown by means of the curved arrow in the vicinity of each projection 140.

In addition, the bottom 11 may be provided in situ with a thickening 142 serving as a stop for the deformed elastic projection 140, so that the respective passage 14 is screened and optionally closed.

In the embodiment of figure 4a, the projections 140 are provided close to the centre of the bottom 11 and project laterally outwards, thereby each screening a passage 14. As is shown in figure 4a, the bottom 11 is provided with four passages 14 and, accordingly, with four projections 140, which are secured to the bottom 11 near the centre of the bottom 11.

Figure 4b shows a similar embodiment, wherein the projections 141 are secured to the bottom 11 on the periphery and extend inwards, thereby each screening a passage. Also in this case, the projections 141 are made of, for example, an elastic material, so that deformation (as indicated by means of the curved arrow in figure 4b) by means of a finger is possible, and, also in this case, each projection 141 has a stop in the form of a thickening 142 provided in the bottom 11.

## Claims

1. An assembly for use in a device for preparing an extract from a product to be extracted, consisting of:
- a holder at least comprising a bottom provided with at least one passage and an upright side wall, which bound an interior space, and
- a pouch made of a filtering material, which is filled with the product to be extracted and which is present in the interior space of the holder, **characterised in that** at least part of the holder is movable relative to the pouch for ejecting the pouch.

2. An assembly according to claim 1, **characterised in that** at least the movable part of the holder is deformable.

3. An assembly according to claim 2, **characterised in that** at least the deformable part of the holder is reversibly deformable.

4. An assembly according to any one of the preceding claims, **characterised in that** the deformable part of the holder is made of a more flexible material than the rest of the holder.

5. An assembly according to any one of the preceding claims, **characterised in that** the deformable part of the holder is made of a thinner material than the rest of the holder.

6. An assembly according to any one of the preceding claims, **characterised in that** the bottom is movable.

7. An assembly according to claim 6, **characterised in that** the bottom comprises a bottom part that is movable relative to the holder.

8. An assembly according to claim 6 or 7, **characterised in that** the bottom part abuts against the upright side wall all around.

9. An assembly according to any one of the claims 6-8, **characterised in that** the bottom part is provided with a projecting cam, which extends through an opening formed in the bottom.

10. An assembly according to any one of the claims 6-9, **characterised in that** the bottom part is provided with one or more passages.

11. An assembly according to claim 6, **characterised in that** the deformable bottom is provided with at least one circumferential folding ridge.

12. An assembly according to any one of the preceding claims, **characterised in that** the bottom is provided with a plurality of upright projections arranged around the at least one passage and directed toward the interior space.

13. An assembly according to any one of the preceding claims, **characterised in that** at least one circumferential peripheral part of the upright wall is deformable.

14. An assembly according to claim 13, **characterised in that** the deformable circumferential peripheral part of the upright wall is configured as a folding bellows.

15. An assembly according to any one of the claims 1-14, **characterised in that** the deformable part of the holder is a spring element which can be accommodated in the holder, which spring element extends through an opening formed in the bottom.

16. An assembly according to any one of the claims 1-14, **characterised in that** the movable and non-movable part of the holder are manufactured as separate parts.

17. An assembly according to any one of the claims 1-14, **characterised in that** the movable and non-movable part of the holder are manufactured in one piece.

18. An assembly according to any one of the preceding claims, **characterised in that** the interior space of the holder can be closed by means of a closing member which can be placed on the upright wall, which closing member is provided with at least one passage.

19. An assembly according to claim 18, **characterised in that** the holder and the closing member are interconnected by means of at least one pivot.

20. An assembly according to any one of the preceding claims, **characterised in that** the holder is provided with a free peripheral edge against which a circumferential sealing ring can be provided.

21. An assembly according to any one of the preceding claims, **characterised in that** the holder is provided with a projection screening the at least one passage.

22. An assembly according to claim 21, **characterised in that** the projection is made of an elastic material

23. A holder for use in a device for preparing an extract from a product to be extracted, comprising at least a bottom provided with at least one passage and an upright side wall, which bound an interior space, and wherein - during use - a pouch which is made of a filtering material and which is filled with the product to be extracted can be accommodated in the interior space, according to any one of claims 1 - 22.
